# EUROPÄISCHE PATENTSCHRIFT

(11) **EP 3 094 529 B1**
(45) Veröffentlichungstag und Bekanntmachung des Hinweises auf die Patenterteilung: **01.07.2020**
(21) Anmeldenummer: 14811903.5
(22) Anmeldetag: 12.12.2014
(51) Int. Cl.: B60T 13/68, B60T 8/40, B60T 17/02, B60T 17/18

(54) **BREMSENSTEUERVORRICHTUNG SOWIE BREMSANLAGE FÜR FAHRZEUGE**
BRAKE CONTROL UNIT AND BRAKE SYSTEM FOR VEHICLES
UNITÉ DE CONTRÔLE DE FREIN ET SYSTÈME DE FREIN POUR VÉHICULES

(30) Priorität: 15.01.2014 DE 102014200561; 09.10.2014 DE 102014220440
(43) Veröffentlichungstag der Anmeldung: 23.11.2016
(73) Patentinhaber: Continental Teves AG & Co. OHG, 60488 Frankfurt am Main (DE)
(72) Erfinder: LINHOFF, Paul, 61267 Neu-Anspach (DE); HEISE, Andreas, 64390 Erzhausen (DE)
(86) Internationale Anmeldenummer: PCT/EP2014/077584
(87) Internationale Veröffentlichungsnummer: WO 2015/106892

(56) Entgegenhaltungen:
- WO-A1-02/42138
- WO-A1-2012/028521
- DE-A1-102012 205 962

## Beschreibung

Die Erfindung betrifft ein Bremsensteuervorrichtung gemäß dem Oberbegriff von Anspruch 1 und eine Bremsanlage gemäß dem Oberbegriff von Anspruch 9.

Bei Kraftfahrzeugen sind hydraulische Bremssysteme weit verbreitet. Vermehrt kommen sogenannte "Bra-ke-by-wire"-Bremssysteme zum Einsatz, in welchen Bremsungen durchführbar sind, die durch elektrische bzw. elektronische (Fremd)Ansteuerung ausgelöst werden. Derartige, durch elektronische Steuergeräte ausgelöste Bremsungen finden beispielsweise bei automatischen Abstandsregelsystemen oder (Not)Bremsassistenzfunktionen Anwendung. Es sind weiter Bremssysteme bekannt, die auch bei einer Normalbremsbetätigung durch den Fahrer die Bremsbetätigung lediglich elektronisch erfassen und ohne direkten mechanischen oder hydraulischen Zugriff des Fahrers auf die Radbremsen eine Bremsung einleiten.

Bekannte konventionelle hydraulische Fahrzeug-Bremsanlagen umfassen oftmals Radbremsen (z.B. hydraulisch betätigte Scheibenbremsen), eine elektrohydraulischen Bremsschlupf-Fahrstabilitäts-Kontrolleinheit (HECU) und eine Bremsbetätigungseinrichtung mit einem Vakuumbremskraftverstärker. Der elektronische Regler der elektrohydraulischen Kontrolleinheit ist meist nach dem sogenannten "Fail Silent"-Prinzip ausgelegt, d.h. nach einem erkannten Fehler wird die Kontrolleinheit vollständig oder teilweise elektrisch funktionslos geschaltet. Eine Möglichkeit der Betätigung der Bremsanlage durch den Fahrer, z.B. ohne elektrische Unterstützung oder Beeinflussungsmöglichkeit, bleibt aber bestehen.

Bekannte elektrohydraulische Kontrolleinheiten für ABS/ESP-Kraftfahrzeugbremsanlagen umfassen zwei Eingangsdruckanschlüsse, d.h. für jeden der zwei Bremskreise einen Eingangsdruckanschluss, vier radindividuelle Ausgangsdruckanschlüsse, eine Druckregelventilanordnung zum Einstellen radindividueller Bremsdrücke an den Ausgangsdruckanschlüssen, einen Niederdruckspeicher je Bremskreis zur Aufnahme von aus den Radbremsen abgelassenem Druckmittel und eine zweikreisige Rückförderpumpe.

Weiterhin sind elektrohydraulische Simulatorbremsanlagen bekannt, in welchen das Bremspedalgefühl in der Normalbetriebsart durch einen Simulator erzeugt wird. In einem Fehlerfall ist in einer sogenannten hydraulischen Rückfallebene jedoch üblicherweise weiterhin eine direkte Betätigung der Radbremsen durch den Fahrer möglich.

Es ist zu erwarten, dass zukünftig auch Fahrzeugbremssysteme zum Einsatz kommen werden, welche für automatisch fahrende Fahrzeuge geeignet sind. Diese Bremssysteme müssen grundsätzlich fremdansteuerbare Systeme oder "Brake-by-wire"-Systeme sein. Dies bedeutet, dass eine Bremsanforderung über elektronische oder elektrische Steuersignale angefordert und vom System ohne Zutun des Fahrers umgesetzt werden kann. Hierbei muss aus Sicherheitsgründen eine ausreichend hohe Verfügbarkeit des Bremssystems bzw. der fremdansteuerbaren Bremsfunktion gewährleistet sein.

So sind grundsätzlich Bremssysteme vorstellbar, bei denen zwei vollständige Bremssysteme parallel mit unterschiedlichen Bremsen, z.B. Bremssätteln, auf ein oder mehreren Bremsscheiben eines Kraftfahrzeuges arbeiten. Diese parallele Ausführung ist jedoch sehr aufwändig, und damit kostenintensiv, und benötigt eine Vielzahl von speziellen Neukonstruktionen der einzelnen Bremssystem-Komponenten, welche ein derartiges System gegenüber vorhandenen Großserienprodukten anfällig für Fehler macht.

Für das hochautomatische bzw. hochautomatisierte Fahren (HAF) ist ein Abschalten der Bremsanlage nach einem beliebigen Erstfehler nicht möglich. Es soll bei Ausfall eines, dem autonomen Fahren zugeordneten elektronischen Steuergerätes zumindest für einen vorgegebenen Zeitraum (z.B. einige Sekunden) eine funktionelle autonome Bremsfunktion wie auch Lenkfunktion noch dargestellt werden können, da nicht davon ausgegangen werden darf, dass der Fahrer unmittelbar nach einem Ausfall des Steuergerätes die Führung des Fahrzeugs übernehmen kann, sondern erst zur Wideraufnahme der Fahraufgabe aufgefordert werden und sich auf diese einstellen muss.

Aus der WO 2012/028521 A1 ist eine Bremsanlage für Kraftfahrzeuge bekannt mit einer elektrisch steuerbaren Druckbereitstellungseinrichtung, einer Druckregelventilanordnung zur Regelung und/oder Steuerung der an den einzelnen Radbremsen eingesteuerten Radbremsdrücke und einer ersten elektronischen Steuer- und Regeleinheit, welche die Druckbereitstellungseinrichtung und die Druckregelventilanordnung steuert oder regelt, wobei eine elektrisch steuerbare Zusatzdruckbereitstellungsvorrichtung mit einer zweiten elektronischen Steuer- und Regeleinheit vorgesehen ist, mittels welcher der Hauptbremszylinder betätigbar ist. Im Falle eines Ausfalls der ersten elektronischen Steuer- und Regeleinheit ist jedoch ein Einstellen von radindividuellen Bremsdrücke an den Radbremsen mittels der Druckregelventilanordnung nicht mehr möglich. Die Bremsanlage ist daher für hochautomatisiert oder autonom fahrende Kraftfahrzeuge weniger geeignet.

Es ist Aufgabe der vorliegenden Erfindung, eine Bremsensteuervorrichtung sowie eine Bremsanlage für Fahrzeuge bereitzustellen, mit der die Sicherheitsanforderungen des hochautomatisierten Fahrens oder des autonomen Fahrens erfüllt werden.

Diese Aufgabe wird erfindungsgemäß durch ein Bremsensteuervorrichtung gemäß Anspruch 1 und eine Bremsanlage gemäß Anspruch 9 gelöst.

Der Erfindung liegt der Gedanke zugrunde, dass die Bremsensteuervorrichtung, welche eine Druckquelle, für jede Radbremse einen radindividuellen Ausgangsdruckanschluss und eine Druckregelventilanordnung zum Einstellen radindividueller Bremsdrücke an den Ausgangsdruckanschlüssen umfasst, für jede Radbremse einen radindividuellen Eingangsdruckanschluss umfasst. Diese Bremsensteuervorrichtung kann in Reihe zwischen eine an sich bekannte Bremsensteuervorrichtung mit einem radindividuellen Ausgangsdruckanschluss für jede Radbremse und einer Druckregelventilanordnung zum Einstellen radindividueller Bremsdrücke an den Ausgangsdruckanschlüssen, und die Radbremsen geschaltet werden. So ist eine radindividuelle Regelung an jeder Radbremsen auch bei Ausfall einer der Bremsensteuervorrichtungen weiterhin mittels der anderen Bremsensteuervorrichtung möglich.

Die Erfindung bietet den Vorteil, dass bei einem beliebigen Einfachfehler der Bremsanlage ein sicheres Abbremsen des Fahrzeuges in beliebigen Fahrsituationen, d.h. insbesondere mit radindividuellen Radbremsdrücken, weiterhin möglich ist, ohne dass die Unterstützung des Fahrers dafür notwendig wäre.

Die Erfindung bietet den Vorteil, dass eine Bremsensteuervorrichtung bzw. eine Bremsanlage mit einer solchen Bremsensteuervorrichtung bereitgestellt wird, die eine redundante radindividuelle Bremsregelfunktion, insbesondere eine ESP-Funktion (Fahrstabilitätsfunktion, ESP: Electronic Stability Program), gewährleistet. Auch nach dem Auftreten eines beliebigen Einzelfehlers kann noch die volle Bremsregelfunktion dargestellt werden.

Bevorzugt handelt es sich um eine elektrohydraulische Bremsensteuervorrichtung für zumindest vier hydraulisch betätigbare Radbremsen. Ebenso handelt es sich bevorzugt um eine Bremsanlage für Kraftfahrzeuge mit hydraulisch betätigbaren Radbremsen. Die Erfindung betrifft jedoch auch eine elektropneumatische Bremsensteuervorrichtung bzw. eine pneumatische Bremsanlage.

Eine Druckregelventilanordnung umfasst bevorzugt je Radbremse mindestens ein elektrisch betätigbares Ventil, um radindividuelle Bremsdrücke an den radindividuellen Ausgangsdruckanschlüssen einstellen zu können.

Die erfindungsgemäße Bremsensteuervorrichtung bietet weiterhin den Vorteil, dass sie optional in einem Fahrzeug bzw. in einer an sich bekannten Bremsanlage ergänzt werden kann, um ein hochautomatisiertes Fahren oder autonomes Fahren zu ermöglichen.

Gemäß einer bevorzugten Ausführungsform der erfindungsgemäßen Bremsensteuervorrichtung umfasst die Druckquelle der Bremsensteuervorrichtung für jede Radbremse zumindest eine Pumpe oder zumindest einen Pumpenkreis einer Pumpe, so dass jede Radbremse von einem eigenen Pumpenpfad versorgt werden kann.

Zur Regelung der Radbremsdrücke umfasst die Bremsensteuervorrichtung bevorzugt für jede Radbremse einen Drucksensor zur Erfassung des Radbremsdruckes.

Die Druckregelventilanordnung der die Bremsensteuervorrichtung umfasst bevorzugt für jede Radbremse zumindest ein elektrisch betätigbares, analog ansteuerbares oder analogisiert ausgeführtes Ventil.

Um schnell und ausreichend Druckmittel in die Radbremsen fördern zu können, umfasst die Bremsensteuervorrichtung gemäß einer Weiterbildung der erfindungsgemäßen Bremsensteuervorrichtung zumindest ein Druckmittelreservoir, welches Druckmittel zum Befüllen zumindest einer Radbremse bereithält. Besonders bevorzugt ist für jede Radbremse ein Druckmittelreservoir in der Bremsensteuervorrichtung vorgesehen.

Bevorzugt ist die Bremsensteuervorrichtung einteilig als ein Bremsensteuergerät ausgeführt. Besonders bevorzugt umfasst das Bremsensteuergerät eine elektronische Steuer- und Regeleinheit und einer hydraulische Steuer- und Regeleinheit. Die Druckquelle ist vorteilhafterweise als eine zumindest vierkreisige Pumpe ausgeführt.

Um der größeren Druckmittelvolumenaufnahme der Vorderradbremsen Rechnung zu tragen, ist jeder Vorderradbremse bevorzugt eine zweikreisige Pumpe oder zwei Pumpen zugeordnet.

Alternativ ist es bevorzugt, dass die Bremsensteuervorrichtung zwei- oder mehrteilig ausgeführt ist, um die einzelnen Steuergeräte flexibler im Fahrzeug anordnen zu können. Besonders bevorzugt ist die Bremsensteuervorrichtung als zwei Bremsensteuergeräte ausgeführt. Jedes Bremsensteuergerät umfasst besonders bevorzugt eine elektronische Steuer- und Regeleinheit und eine hydraulischen Steuer- und Regeleinheit, wobei die hydraulische Steuer- und Regeleinheit vorteilhafterweise die Druckregelventile für die dem Bremsensteuergerät zugeordneten Radbremsen umfasst.

Jedes Bremsensteuergerät umfasst bevorzugt eine zumindest zweikreisige Pumpe als Druckquelle.

Die Erfindung betrifft auch eine Bremsanlage für Fahrzeuge mit einer erfindungsgemäßen Bremsensteuervorrichtung.

Bevorzugt wird die erfindungsgemäße Bremsensteuervorrichtung als Zusatz zu einem an sich bekannten, fremdansteuerbaren Bremssystem (besonders bevorzugt einem "by-wire"-Bremssystem oder einem konventionellen Bremssystem mit Vakuumbremskraftverstärker) als ein zumindest teil-redundantes System hinzugefügt, wobei die erfindungsgemäße (zweite) Bremsensteuervorrichtung in Reihe zwischen die (erste) Bremsensteuervorrichtung des an sich bekannten Bremssystems und die Radbremsen geschaltet wird. Bei Ausfall der ersten Bremsensteuervorrichtung übernimmt bevorzugt die erfindungsgemäße (zweite) Bremsensteuervorrichtung die Bremsfunktionen, insbesondere die Druckaufbaufunktion in den Radbremskreisen, aber vorteilhafterweise auch (radindividuelle) Bremsregeleingriffe. Besonders bevorzugt führt die erfindungsgemäße Bremsensteuervorrichtung neben einfachen Bremsfunktionen auch eine elektronische Bremskraftverteilung (EBV) und/oder eine Antiblockierregelfunktion (ABS) und/oder Fahrdynamikfunktionen (ESP) und/oder sonstige Bremsaktivierungen durch.

Bevorzugt umfasst die zweite Bremsensteuervorrichtung für jede Radbremse einen radindividuellen Eingangsdruckanschluss, wobei jeder radindividuelle Ausgangsdruckanschluss der ersten Bremsensteuervorrichtung mit genau einem der Eingangsdruckanschlüsse der zweiten Bremsensteuervorrichtung verbunden ist.

Entsprechend umfasst die zweite Bremsensteuervorrichtung bevorzugt für jede Radbremse einen radindividuellen Ausgangsdruckanschluss, welcher mit einer der Radbremsen verbunden ist.

Bevorzugt stellt oder regelt die zwischengeschaltete zweite Bremsensteuervorrichtung im Bedarfsfall, insbesondere wenn keine hydraulischen Radbremsdrücke von der vorgeschalteten ersten Bremsensteuervorrichtung eingeleitet werden, selbständig (Rad)Bremsdrücke ein.

Die zweite Bremsensteuervorrichtung ist bevorzugt derart ausgeführt, dass sie lediglich einen Bremsdruck aufbaut oder auch wieder abbaut, wenn kein Vorgabedruck anliegt.

Alternativ ist die zweite Bremsensteuervorrichtung bevorzugt derart ausgeführt, dass sie trotz Vorgabedruck der vorgeschalteten ersten Bremsensteuervorrichtung aktiv Druck abbauen kann.

Bevorzugt ist die Bremsanlage derart ausgelegt, dass die zweite Bremsensteuervorrichtung, neben Selbsttests, nur bei Ausfällen der ersten Bremsensteuervorrichtung aktiv wird. Alternativ ist die Bremsanlage bevorzugt derart ausgelegt, dass die zweite Bremsensteuervorrichtung auch bei üblichen Bremsoperationen, z.B. zur Performancesteigerung der Bremsanlage, im Normalbetrieb genutzt wird.

Die Verschaltung der Bremsanlage ist bevorzugt derart ausgeführt, dass die erste (z.B. konventionelle) Bremsensteuervorrichtung unabhängig von der zweiten Bremsensteuervorrichtung diverse oder alle Bremsregelfunktionen durchführen kann und dass auch die zweite zweite Bremsensteuervorrichtung diverse oder sogar alle Bremsregelfunktionen, und besonders bevorzugt auch die Bremsung von einzelnen oder mehreren Rädern zu Spurhalte-oder Lenkbeeinflussungen, durchführen kann.

Bevorzugt sind die Bremsensteuervorrichtungen so ausgelegt, dass im Normalbetrieb (kein Ausfall einer Bremsensteuervorrichtung) sich eine Bremsensteuervorrichtung (vorteilhafterweise die zweite Bremsensteuervorrichtung) in einem passiven Modus (z.B. nur Selbstüberwachung und Test) befindet und die andere Bremsensteuervorrichtung (vorteilhafterweise die erste Bremsensteuervorrichtung) die übliche Regelfunktionen ausführt.

Alternativ ist es bevorzugt, dass im Normalbetrieb zumindest zeitweise erste und zweite Bremsensteuervorrichtung an der Regelung beteiligt sind, um z.B. in einzelnen Fällen höhere Regelperformance darzustellen.

Die erste Bremsensteuervorrichtung ist bevorzugt einteilig als ein Bremsensteuergerät mit einer elektronischen Steuer- und Regeleinheit und einer hydraulischen Steuer- und Regeleinheit oder mehrteilig, besonders bevorzugt zweiteilig als zwei Bremsensteuergeräte mit je einer elektronischen Steuer- und Regeleinheit und einer hydraulischen Steuer- und Regeleinheit, ausgeführt.

Bevorzugt umfasst die Bremsanlage eine integrierte oder aufgelöste (erste) elektrohydraulische Bremsensteuervorrichtung einer konventionellen bzw. herkömmlichen Bremsanlage mit zumindest einem elektrohydraulischen Steuergerät mit integrierter Elektronik.

Besonders bevorzugt ist die zweite Bremsensteuervorrichtung in zwei Steuergeräte aufgeteilt.

Gemäß einer bevorzugten Ausführungsform der erfindungsgemäßen Bremsanlage sind für jedes der mit einer Radbremse versehenen Räder zumindest zwei Einrichtungen zur Erfassung einer Raddrehzahl vorgesehen, wobei jeweils das Signal einer der Einrichtungen der ersten Bremsensteuervorrichtung und das Signal der andere Einrichtung der zweiten Bremsensteuervorrichtung zugeführt wird.

Bevorzugt werden bei einer in zwei Bremsensteuergeräten ausgeführten zweiten Bremsensteuervorrichtung die Signale der anderen Einrichtungen demselben Bremsensteuergerät zugeführt.

Alternativ wird bei einer in zwei Bremsensteuergeräten ausgeführten zweiten Bremsensteuervorrichtung jeweils das Signal der anderen Einrichtung dem Bremsensteuergerät zugeführt, dem die zugehörige Radbremse zur Bremsdruckeinstellung zugeordnet ist.

Gemäß einer anderen bevorzugten Ausführungsform der erfindungsgemäßen Bremsanlage ist für jedes der mit einer Radbremse versehenen Räder zumindest eine redundant ausgeführte Einrichtung zur Erfassung einer Raddrehzahl vorgesehen, wobei jeweils ein Signal der Einrichtung der ersten Bremsensteuervorrichtung und das andere Signal der zweiten Bremsensteuervorrichtung zugeführt wird.

Zur Erhöhung der Verfügbarkeit der Bremsanlage werden bevorzugt die erste Bremsensteuervorrichtung von einer ersten elektrischen Energiequelle und die zweite Bremsensteuervorrichtung von einer zweiten elektrischen Energiequelle mit elektrischer Energie versorgt. Die erste und die zweite Energiequelle, sowie die zugehörigen Versorgungsleitungen, sind besonders bevorzugt unabhängig voneinander.

Bevorzugt wird die zweite Bremsensteuervorrichtung von zumindest einer unabhängigen elektrischen Energiequelle elektrisch versorgt.

Bevorzugt werden die erste und die zweite Bremsensteuervorrichtung aus mehr als einer elektrischen Energiequelle versorgt.

Es sind bevorzugt unterschiedliche Informationskanäle (z.B. Datenbusse) zu den Bremsensteuervorrichtungen vorgesehen.

Bevorzugt umfasst die Bremsanlage eine dritte elektronische Steuer- und Regeleinheit, welche eine Bremsanforderung oder einen Bremsdrucksollwert vorgibt. Besonders bevorzugt ist die erste Bremsensteuervorrichtung über eine erste Datenverbindung und die zweite Bremsensteuervorrichtung über eine zweite Datenverbindung mit der dritten elektronischen Steuer- und Regeleinheit verbunden. Die Datenverbindungen sind vorteilhafterweise als Datenbusse ausgeführt.

Weitere bevorzugte Ausführungsformen der Erfindung ergeben sich aus den Unteransprüchen und der nachfolgenden Beschreibung anhand von Figuren.

Es zeigen schematisch:
- Fig. 1: ein erstes Ausführungsbeispiel einer erfindungsgemäßen Bremsanlage,
- Fig. 2: ein zweites Ausführungsbeispiel einer erfindungsgemäßen Bremsanlage,
- Fig. 3: beispielhafte, an sich bekannte Bremsanlagen, in welchen eine erfindungsgemäße Bremsensteuervorrichtung angeordnet werden kann,
- Fig. 4: ein erstes Ausführungsbeispiel einer erfindungsgemäßen Bremsensteuervorrichtung,
- Fig. 5: ein zweites Ausführungsbeispiel einer erfindungsgemäßen Bremsensteuervorrichtung,
- Fig. 6: ein drittes Ausführungsbeispiel einer erfindungsgemäßen Bremsensteuervorrichtung,
- Fig. 7: ein viertes Ausführungsbeispiel einer erfindungsgemäßen Bremsensteuervorrichtung, und
- Fig. 8: ein fünftes Ausführungsbeispiel einer erfindungsgemäßen Bremsensteuervorrichtung.

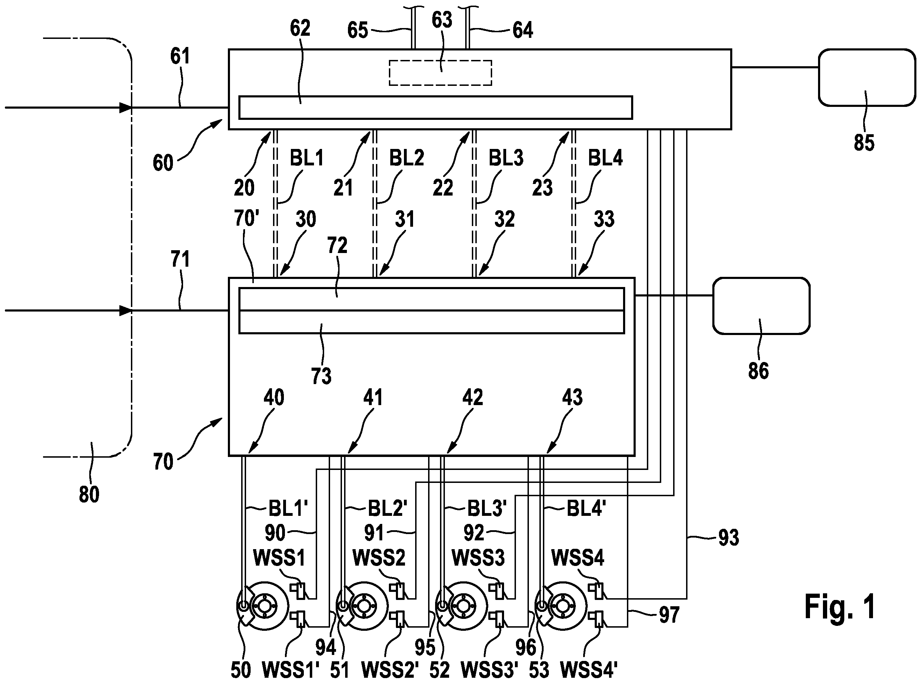

Fig. 1 zeigt einen Ausschnitt eines ersten Ausführungsbeispiels einer erfindungsgemäßen Bremsanlage. Die beispielsgemäße Bremsanlage umfasst im Wesentlichen vier hydraulisch betätigbare Radbremsen 50, 51, 52, 53, eine erste elektrohydraulische Bremsensteuervorrichtung 60, welche eine schematisch angedeutete erste Druckregelventilanordnung 62 zum Einstellen radindividueller Bremsdrücke sowie für jede Radbremse 50, 51, 52, 53 einen radindividuellen Ausgangsdruckanschluss 20, 21, 22, 23 umfasst, sowie eine zweite elektrohydraulische Bremsensteuervorrichtung 70, welche eine schematisch angedeutete zweite Druckregelventilanordnung 72 und eine elektrisch ansteuerbare Druckquelle 73 umfasst. Die Bremsensteuervorrichtung 70 ist hydraulisch in Reihe zwischen die erste Bremsensteuervorrichtung 60 und die Radbremsen 50, 51, 52, 53 geschaltet. Hierzu umfasst die Bremsensteuervorrichtung 70 für jede Radbremse 50, 51, 52, 53 einen radindividuellen Eingangsdruckanschluss 30, 31, 32, 33 und einen radindividuellen Ausgangsdruckanschluss 40, 41, 42, 43.

Vorteilhafterweise umfasst die erste Bremsensteuervorrichtung 60 eine schematisch angedeutete, elektrisch ansteuerbare Druckquelle 63, mittels welcher, insbesondere unabhängig von einer Bremspedalbetätigung durch den Fahrer, ein Bremsdruck erzeugbar ist.

Die Bremsanlage umfasst bevorzugt weitere, an sich bekannte Komponenten, wie z.B. ein Bremspedal oder einen bremspedalbetätigbaren Hauptbremszylinder, welche in Fig. 1 der Übersichtlichkeit wegen nicht dargestellt sind. Beispielsgemäß ist die Bremsensteuervorrichtung 60 mit den Druckräumen eines Hauptbremszylinders verbunden, was in Fig. 1 durch zwei Bremskreisleitungen 64, 65 angedeutet ist.

Die Bremsanlage umfasst also neben der ersten Bremsensteuervorrichtung 60 und eine zusätzliche zweite Bremsensteuervorrichtung 70, wobei jeder radindividuelle Ausgangsdruckanschluss 20, 21, 22, 23 der Bremsensteuervorrichtung 60 mit genau einem der radindividuellen Eingangsdruckanschlüsse 30, 31, 32, 33 der Bremsensteuervorrichtung 70 über eine hochdruckfeste Bremsleitung BL1, BL2, BL3, BL4 verbunden ist. Je eine hochdruckfeste Bremsleitung BL1', BL2', BL3', BL4' verbindet genau einen Ausgangsdruckanschluss 40, 41, 42, 43 der Bremsensteuervorrichtung 70 mit genau einer der Radbremsen 50, 51, 52, 53. So kann eine radindividuelle Bremsregelung mittels der Druckregelventilanordnung 62 der Bremsensteuervorrichtung 60 oder mittels der Druckregelventilanordnung 72 der Bremsensteuervorrichtung 70 durchgeführt werden.

Zur weiteren Erhöhung der Verfügbarkeit der Bremsregelfunktion wird jede Bremsensteuervorrichtung 60, 70 von einer eigenen (unabhängigen) elektrischen Energieversorgung 85, 86 mit elektrischer Energie versorgt, wobei der Bremsensteuervorrichtung 60 die elektrische Energieversorgung 85 und der Bremsensteuervorrichtung 70 die elektrische Energieversorgung 86 zugeordnet ist.

Beispielsgemäß ist die erste Bremsensteuervorrichtung 60 einteilig als ein Bremsensteuergerät (HECU) mit einer elektronischen Steuer- und Regeleinheit (ECU) und einer hydraulischen Steuer- und Regeleinheit (HCU) ausgeführt.

Beispielsgemäß ist auch die zweite Bremsensteuervorrichtung 70 einteilig als ein Bremsensteuergerät 70' mit einer elektronischen Steuer- und Regeleinheit (ECU) und einer hydraulischen Steuer- und Regeleinheit (HCU) ausgeführt.

Die beispielsgemäße Bremsanlage umfasst weiterhin eine dritte elektronische Steuer- und Regeleinheit 80 oder ist mit einer dritten elektronischen Steuer- und Regeleinheit 80 verbunden. Diese dient z.B. zur Steuerung weiteren Fahrzeugfunktionen, insbesondere der Funktionen zum hochautomatisierten oder autonomen Fahren (HAF). Die Steuer- und Regeleinheit 80 gibt beispielsgemäß eine Bremsanforderung oder einen Bremsdrucksollwert an die Bremsanlage vor, welcher an die Bremsensteuervorrichtungen 60, 70 weitergeleitet wird. Hierzu sind die erste Bremsensteuervorrichtung 60 über eine erste Datenverbindung 61, z.B. einen ersten Datenbus, und die zweite Bremsensteuervorrichtung 70 über eine zweite Datenverbindung 71, z.B. einen zweiten Datenbus, mit der elektronischen Steuer- und Regeleinheit 80 verbunden. Steuergerät 80 ist z.B. ein Fahrzeug-Controller oder ein HAF-Controller.

In einem Fahrzeug mit HAF-Funktion wird vorteilhafterweise eine Bremsanforderung oder auch eine Verzögerungsanforderung oder ähnliches, die durch das HAF-Steuergerät 80 als Befehl/Vorgabe an die erste Bremsensteuervorrichtung 60 gesendet wird, auch zeitgleich an die zweite Bremsensteuervorrichtung 70 gesendet. Sind beide Bremsensteuervorrichtungen 60, 70 intakt, so führt nur eine Bremsensteuervorrichtungen, z.B. die erste Bremsensteuervorrichtung 60, die Anforderung aus. Nur bei Ausfall der ersten erste Bremsensteuervorrichtung 60, oder wenn diese Unterstützung anfordert, übernimmt die zweite Bremsensteuervorrichtung 70, insbesondere die radindividuelle Bremsdruckregelung.

Es sind Systeme denkbar, bei denen die beiden Bremsensteuervorrichtungen 60, 70 untereinander Motion-Funktionen, z.B. auch Lenkanforderungen, auslösen oder anfordern. Es sind auch Systeme denkbar, bei denen diese Anforderungen von einem oder mehreren anderen Steuergeräten vorgegeben werden.

Dem Rad jeder Radbremse 50, 51, 52, 53 sind beispielsgemäß zwei Raddrehzahlsensoren zugeordnet, d.h. Raddrehzahlsensoren WSS1 und WSS1' für das Rad der Radbremse 50, Raddrehzahlsensoren WSS2 und WSS2' für das Rad der Radbremse 51, Raddrehzahlsensoren WSS3 und WSS3' für das Rad der Radbremse 52, Raddrehzahlsensoren WSS4 und WSS4' für das Rad der Radbremse 53. Jeweils das Signal des einen Raddrehzahlsensors WSS1, WSS2, WSS3, WSS4 wird der ersten Bremsensteuervorrichtung 60 über eine Signalleitung 90, 91, 92, 93 zugeführt, das Signal des anderen Raddrehzahlsensors WSS1', WSS2', WSS3', WSS4' wird über eine Signalleitung 94, 95, 96, 97 der zweiten Bremsensteuervorrichtung 70 zugeführt.

Anstelle von zumindest zwei Einrichtungen je Radbremse zur Erfassung der Raddrehzahl kann auch eine redundant ausgeführte Einrichtung zur Erfassung der Raddrehzahl (redundanter Raddrehzahlsensor) vorgesehen sein, welche zwei voneinander unabhängige Raddrehzahlsignale liefert.

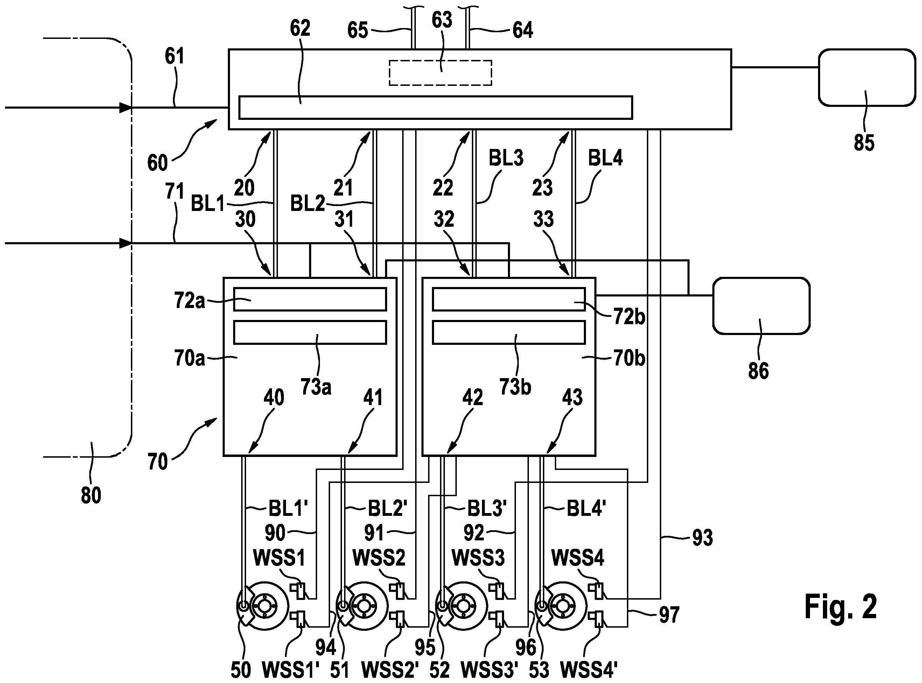

Fig. 2 zeigt einen Ausschnitt eines zweiten Ausführungsbeispiels einer erfindungsgemäßen Bremsanlage. Die beispielsgemäße Bremsanlage gemäß Fig. 2 entspricht weitgehend dem ersten Ausführungsbeispiels und umfasst im Wesentlichen vier hydraulisch betätigbare Radbremsen 50, 51, 52, 53, eine erste elektrohydraulische Bremsensteuervorrichtung 60, welche eine erste Druckregelventilanordnung 62 zum Einstellen radindividueller Bremsdrücke sowie für jede Radbremse 50, 51, 52, 53 einen radindividuellen Ausgangsdruckanschluss 20, 21, 22, 23 umfasst, sowie eine zweite elektrohydraulische Bremsensteuervorrichtung 70, die hydraulisch in Reihe zwischen die erste Bremsensteuervorrichtung 60 und die Radbremsen 50, 51, 52, 53 geschaltet ist. Hierzu umfasst die Bremsensteuervorrichtung 70 für jede Radbremse 50, 51, 52, 53 einen radindividuellen Eingangsdruckanschluss 30, 31, 32, 33, welcher mit genau einem radindividuellen Ausgangsdruckanschluss 20, 21, 22, 23 der Bremsensteuervorrichtung 60 über eine hochdruckfeste Bremsleitung BL1, BL2, BL3, BL4 verbunden ist, und einen radindividuellen Ausgangsdruckanschluss 40, 41, 42, 43, welcher über eine hochdruckfeste Bremsleitung BL1', BL2', BL3', BL4' mit der Radbremse 50, 51, 52, 53 verbunden ist.

Im Unterschied zum Ausführungsbeispiel der Fig. 1 ist die zweite Bremsensteuervorrichtung 70 des Ausführungsbeispiels der Fig. 2 zweiteilig als zwei Bremsensteuergeräte 70a, 70b (erstes zweites Bremsensteuergerät 70a und zweites zweites Bremsensteuergerät 70b) ausgeführt. Dies hat aufbautechnische Vorteile, so können die beiden Bremsensteuergeräte 70a, 70b z.B. unabhängig voneinander angeordnet werden.

Jedes Bremsensteuergeräte 70a, 70b umfasst eine elektronische Steuer- und Regeleinheit (ECU) und eine hydraulische Steuer- und Regeleinheit (HCU).

Das Bremsensteuergerät 70a ist den Radbremsen 50 und 51 zugeordnet, währen das Bremsensteuergerät 70b den Radbremsen 52 und 53 zugeordnet ist. Jedes Bremsensteuergerät 70a, 70b umfasst eine Druckregelventilanordnung 72a, 72b und eine elektrisch ansteuerbare Druckquelle 73a, 73b für die zugeordneten Radbremsen 50, 51 bzw. 52, 53.

Die beispielsgemäße Bremsanlage umfasst ebenfalls eine dritte elektronische Steuer- und Regeleinheit 80 oder ist mit einer dritten elektronischen Steuer- und Regeleinheit 80 verbunden, welche z.B. zur Steuerung der Funktionen zum hochautomatisierten oder autonomen Fahren (HAF) dient. Steuer- und Regeleinheit 80 ist über eine erste Datenverbindung 61, z.B. einen ersten Datenbus, mit der ersten Bremsensteuervorrichtung 60 und über eine zweite Datenverbindung 71, z.B. einen zweiten Datenbus, mit den Bremsensteuergeräten 70a, 70b verbunden.

Dem Rad jeder Radbremse 50, 51, 52, 53 sind beispielsgemäß zwei Raddrehzahlsensoren zugeordnet, d.h. Raddrehzahlsensoren WSS1 und WSS1' für das Rad der Radbremse 50, Raddrehzahlsensoren WSS2 und WSS2' für das Rad der Radbremse 51, Raddrehzahlsensoren WSS3 und WSS3' für das Rad der Radbremse 52, Raddrehzahlsensoren WSS4 und WSS4' für das Rad der Radbremse 53. Jeweils das Signal des einen Raddrehzahlsensors WSS1, WSS2, WSS3, WSS4 wird der ersten Bremsensteuervorrichtung 60 über eine Signalleitung 90, 91, 92, 93 zugeführt.

Die Signale der anderen Raddrehzahlsensoren WSS1', WSS2', WSS3', WSS4' werden über je eine Signalleitung 94, 95, 96, 97 demselben Bremsensteuergerät 70b zugeführt.

Die Signale der (zusätzlichen) Raddrehzahlsensoren WSS1' -WSS4' können aber auch auf die verschiedenen Bremsensteuergeräte 70a, 70b aufgeteilt werden.

Beispielsgemäß sind zwei unabhängige elektrische Energieversorgungen 85, 86 vorgesehen, wobei der Bremsensteuervorrichtung 60 die elektrische Energieversorgung 85 und der Bremsensteuervorrichtung 70 bzw. den Bremsensteuergeräten 70a, 70b die elektrische Energieversorgung 86 zugeordnet ist/sind.

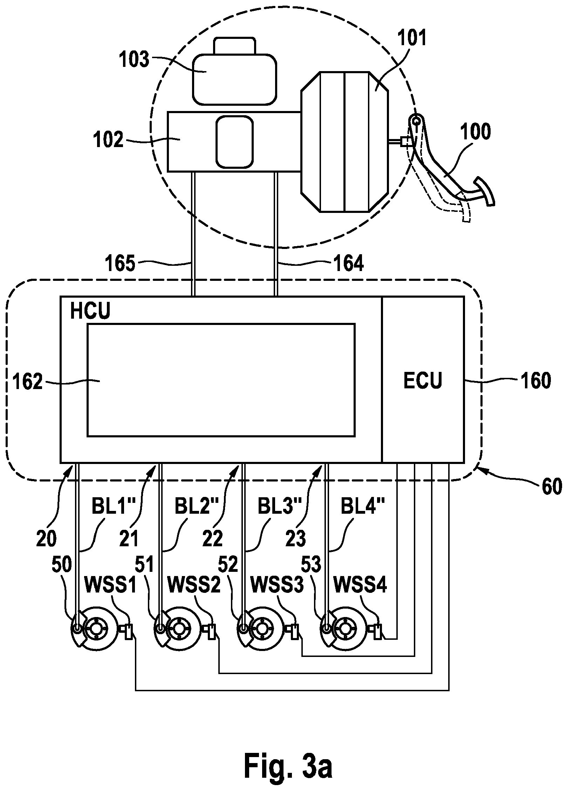

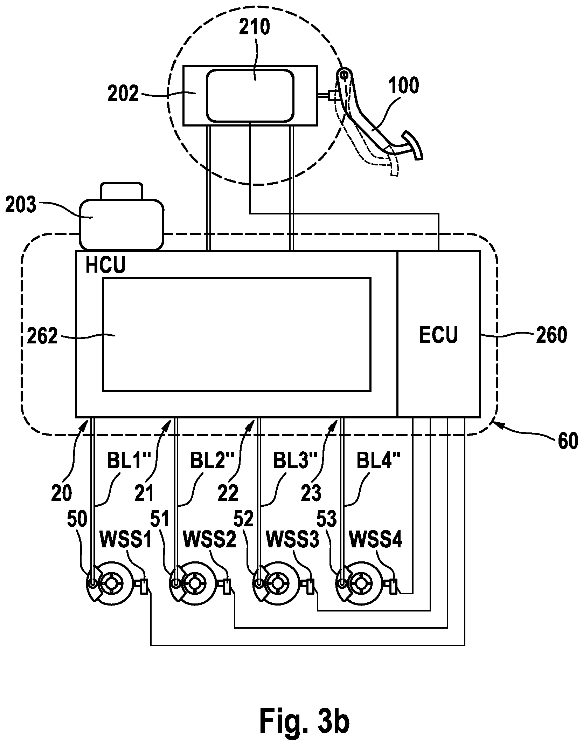

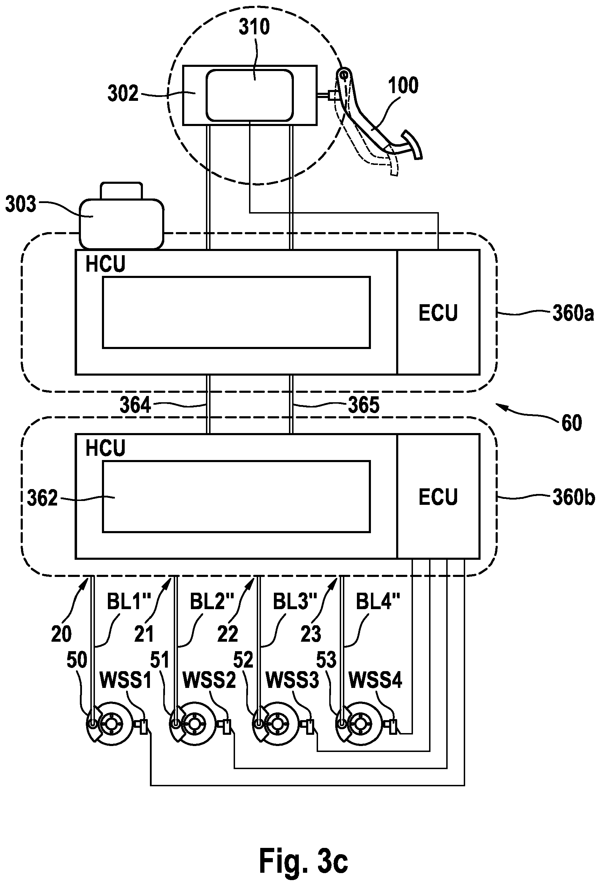

In Fig. 3 sind drei beispielhafte, an sich bekannte hydraulische Bremsanlagen schematisch dargestellt, in welchen eine erfindungsgemäße (zweite) Bremsensteuervorrichtung hydraulisch in Reihe zwischen der ersten Bremsensteuervorrichtung 60 und den Radbremsen 50, 51, 52, 53 angeordnet werden kann.

Fig. 3a zeigt schematisch eine konventionelle Bremsanlage mit einem Bremspedal 100, einem Vakuumbremskraftverstärker 101, einem Tandemhauptbremszylinder 102 mit zugeordnetem Druckmittelvorratsbehälter 103, einer elektrohydraulischen Bremsensteuervorrichtung 60 und hydraulischen Radbremsen 50, 51, 52, 53. Die beiden Druckräume des Tandemhauptbremszylinders 102 sind über Bremskreisleitungen 164, 165 mit den zwei Eingangsdruckanschlüssen der Bremsensteuervorrichtung 60 verbunden. Die Bremsensteuervorrichtung 60 besitzt radindividuelle Ausgangsdruckanschlüsse 20, 21, 22, 23, welche über Bremsleitungen BL1", BL2", BL3", BL4" an je eine der Radbremsen 50, 51, 52, 53 angeschlossen sind.

Bremsensteuervorrichtung 60 ist einteilig als ein Bremsensteuergerät (HECU) 160 mit einer elektronischen Steuer- und Regeleinheit (ECU) und einer hydraulischen Steuer- und Regeleinheit (HCU) ausgeführt. Die hydraulische Einheit umfasst beispielsgemäß vier Radbremskreise, die in zwei Bremskreisen angeordnet sind, und eine Druckregelventilanordnung zum Einstellen radindividueller Radbremsdrücke. Vorteilhafterweise ist in der hydraulischen Einheit eine Druckquelle, z.B. eine zweikreisige Pumpe, vorgesehen, um z.B. Druckmittel rückfördern oder Bremsdruck aktiv aufbauen zu können. Bevorzugt ist das Bremsensteuergerät 160 als eine an sich bekannt ESP-Bremsregeleinheit ausgeführt, die eine Druckregelventilanordnung 162 mit zwölf Ventilen zur Regelung der Radbremsdrücke, einen Niederdruckspeicher je Bremskreis und eine zweikreisige Rückförderpumpe umfasst.

Jedem Rad ist ein Raddrehzahlsensor WSS1, WSS2, WSS3, WSS4 zugeordnet, deren Signale der elektronischen Steuer- und Regeleinheit der Bremsensteuervorrichtung 60 zugeführt werden.

Gemäß einem Ausführungsbeispiel einer erfindungsgemäßen Bremsanlage wird in die Bremsanlage der Fig. 3a eine erfindungsgemäße Bremsensteuervorrichtung als zweite elektrohydraulische Bremsensteuervorrichtung 70 in Reihe zwischen die erste Bremsensteuervorrichtung 60 und die Radbremsen 50, 51, 52, 53 geschaltet.

Fig. 3b zeigt schematisch eine Bremsanlage ohne Vakuumbremskraftverstärker. Mittels eines Bremspedals 100 wird ein Bremsbetätigungselement 202 betätigt und die Bremspedalbetätigung mittels eines Sensors 210 erfasst. Bremsbetätigungselement 202 kann z.B. als ein hydraulischer Bremspedalgefühlsimulator oder als ein Hauptbremszylinder (für eine hydraulische Rückfallebene) ausgeführt sein. Die Bremsanlage umfasst weiter eine elektrohydraulische Bremsensteuervorrichtung 60 mit zugeordnetem Druckmittelvorratsbehälter 203 und hydraulische Radbremsen 50, 51, 52, 53, wobei die Bremsensteuervorrichtung 60 eine Druckregelventilanordnung 262 mit zumindest einem elektrisch betätigbaren Ventil je Radbremse (zur Druckregelung der Radbremsdrücke) und radindividuelle Ausgangsdruckanschlüsse 20, 21, 22, 23 umfasst, an welche über eine Bremsleitung BL1", BL2", BL3", BL4" je eine der Radbremsen 50, 51, 52, 53 angeschlossen ist. Das Bremsbetätigungselement 202 und die Bremsensteuervorrichtung 60 sind beispielsgemäß über zwei nicht näher bezeichnete hydraulische Leitungen miteinander verbunden.

Bremsensteuervorrichtung 60 ist einteilig als ein Bremsensteuergerät (HECU) 260 mit einer elektronischen Steuer- und Regeleinheit (ECU) und einer hydraulischen Steuer- und Regeleinheit (HCU) ausgeführt. Bevorzugt ist das Bremsensteuergerät als eine an sich bekannt ESP-Bremsregeleinheit ausgeführt.

Das Signal des Sensors 210 wird der elektronischen Steuer- und Regeleinheit des Bremsensteuergeräts 260 zugeführt.

Jedem Rad ist ein Raddrehzahlsensor WSS1, WSS2, WSS3, WSS4 zugeordnet, deren Signale der elektronischen Steuer- und Regeleinheit der Bremsensteuervorrichtung 60 zugeführt werden.

Der Bremspedalgefühlsimulator kann auch in dem Bremsensteuergerät 260 angeordnet sein.

Eine solche Bremsanlage ist auch ohne hydraulischen Bremspedalgefühlsimulator ausbildbar. Hierbei kann eine Bremspedalbetätigung z.B. nur elektrisch erfasst und an die elektronische Steuer- und Regeleinheit der Bremsensteuervorrichtung 60 zur Umsetzung des Bremswunsches weitergeleitet werden.

Gemäß einem Ausführungsbeispiel einer erfindungsgemäßen Bremsanlage wird in die Bremsanlage der Fig. 3b eine erfindungsgemäße Bremsensteuervorrichtung als zweite elektrohydraulische Bremsensteuervorrichtung 70 in Reihe zwischen die erste Bremsensteuervorrichtung 60 und die Radbremsen 50, 51, 52, 53 geschaltet.

Fig. 3c zeigt schematisch eine weitere Bremsanlage ohne Vakuumbremskraftverstärker. Mittels eines Bremspedals 100 wird ein Bremsbetätigungselement 302 betätigt und die Bremspedalbetätigung mittels eines Sensors 310 erfasst. Bremsbetätigungselement 302 kann z.B. als ein hydraulischer Bremspedalgefühlsimulator oder als ein Hauptbremszylinder (für eine hydraulische Rückfallebene) ausgeführt sein. Die Bremsanlage umfasst weiter eine elektrohydraulische Bremsensteuervorrichtung 60 mit zugeordnetem Druckmittelvorratsbehälter 303 und hydraulische Radbremsen 50, 51, 52, 53.

Bremsensteuervorrichtung 60 ist zweiteilig als zwei Bremsensteuergeräte 360a, 360b mit je einer elektronischen Steuer- und Regeleinheit (ECU) und einer hydraulischen Steuer- und Regeleinheit (HCU) ausgeführt. Das Bremsbetätigungselement 302 und das Bremsensteuergerät 360a sind beispielsgemäß über zwei nicht näher bezeichnete hydraulische Leitungen miteinander verbunden.

Bremsensteuergeräte 360a dient im Wesentlichen der Bremsdruckerzeugung und umfasst eine elektrisch ansteuerbare Druckquelle sowie zwei (Bremskreis)Ausgangsdruckanschlüsse, welche über je eine Bremsleitung 364, 365 mit einem der zwei Eingangsdruckanschlüsse des Bremsensteuergeräts 360b verbunden sind. Bevorzugt umfasst Bremsensteuergeräte 360a keine Druckregelventile.

Bremsensteuergeräte 360b dient im Wesentlichen der Bremsdruckregelung und umfasst zumindest eine Druckregelventilanordnung 362 mit zumindest einem elektrisch betätigbaren Ventil je Radbremse (zur Druckregelung der Radbremsdrücke) und radindividuelle Ausgangsdruckanschlüsse 20, 21, 22, 23, an welche über eine Bremsleitung BL1", BL2", BL3", BL4" je eine der Radbremsen 50, 51, 52, 53 angeschlossen ist. Optional umfasst Bremsensteuergeräte 360b eine elektrisch ansteuerbare Druckquelle. Bevorzugt ist das Bremsensteuergerät 360b als eine an sich bekannt ESP-Bremsregeleinheit ausgeführt.

Das Signal des Sensors 310 wird der elektronischen Steuer- und Regeleinheit des Bremsensteuergeräts 360a zugeführt, um zur Bremsdruckerzeugung ausgewertet zu werden.

Jedem Rad ist ein Raddrehzahlsensor WSS1, WSS2, WSS3, WSS4 zugeordnet, deren Signale der elektronischen Steuer- und Regeleinheit des Bremsensteuergeräts 360b zugeführt werden, um für die Radbremsdruckregelung zur Verfügung zu stehen.

Der Bremspedalgefühlsimulator kann auch in dem Bremsensteuergerät 360a angeordnet sein.

Eine solche Bremsanlage ist auch ohne hydraulischen Bremspedalgefühlsimulator ausbildbar. Hierbei kann eine Bremspedalbetätigung z.B. nur elektrisch erfasst und an die elektronische Steuer- und Regeleinheit der Bremsensteuervorrichtung 60 zur Umsetzung des Bremswunsches weitergeleitet werden.

Gemäß einem Ausführungsbeispiel einer erfindungsgemäßen Bremsanlage wird in die Bremsanlage der Fig. 3c eine erfindungsgemäße Bremsensteuervorrichtung als weitere elektrohydraulische Bremsensteuervorrichtung 70 in Reihe zwischen das Bremsensteuergerät 360b und die Radbremsen 50, 51, 52, 53 geschaltet.

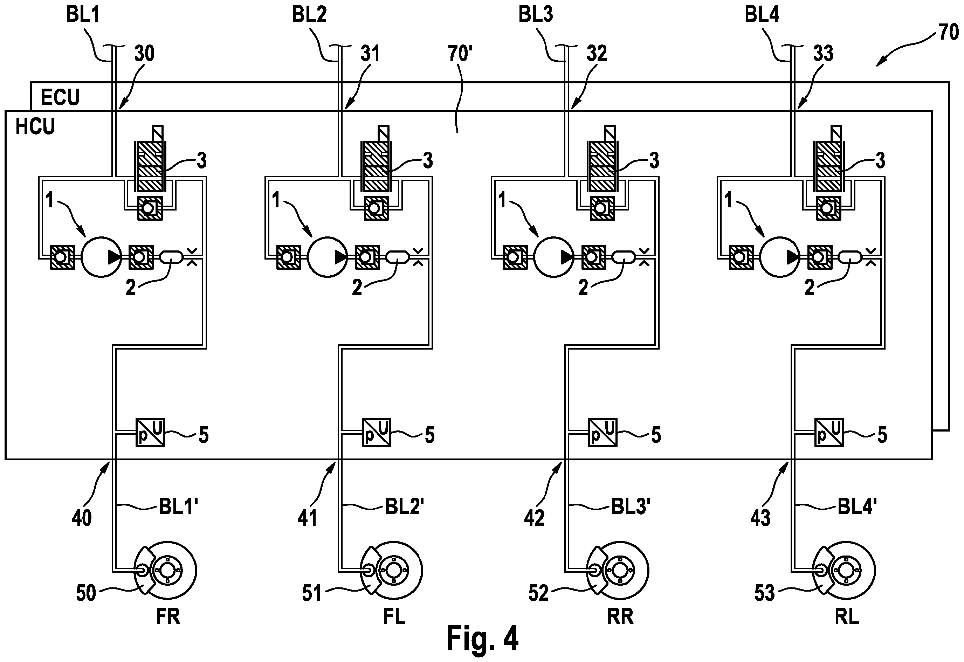

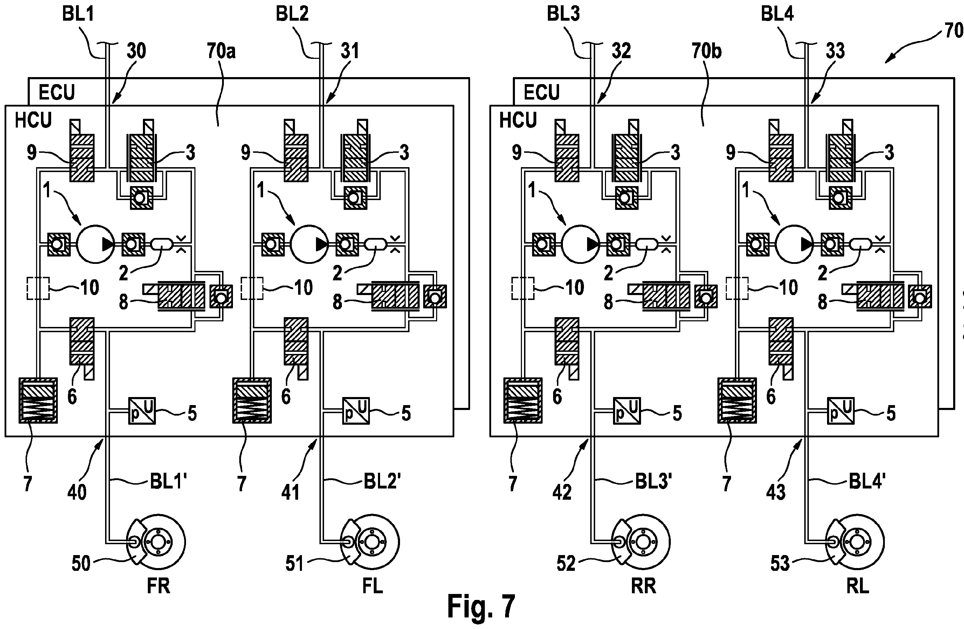

In den Figuren 4 bis 8 sind verschiedene Ausführungsbeispiele einer erfindungsgemäßen Bremsensteuervorrichtung 70 schematisch dargestellt. Dabei ist bei den Ausführungsbeispielen der Fig. 4-6 und 8 die Bremsensteuervorrichtung 70 einteilig ausgeführt, d.h. als ein Bremsensteuergerät 70'. Das Bremsensteuergerät 70' umfasst eine elektronische Steuer- und Regeleinheit (ECU) und eine hydraulische Steuer- und Regeleinheit (HCU). Die verschiedenen Ausführungsbeispiele unterscheiden sich im Wesentlichen in der Ausführung der hydraulischen Komponenten. Bei dem Ausführungsbeispiel der Fig. 7 ist die Bremsensteuervorrichtung 70 zweiteilig ausgeführt, d.h. als zwei Bremsensteuergeräte 70a, 70b. Jedes Bremsensteuergerät 70a, 70b umfasst dabei eine elektronische Steuer- und Regeleinheit (ECU) und eine hydraulische Steuer- und Regeleinheit (HCU).

Grundsätzlich lässt sich jedes der beschriebenen hydraulischen Ausführungsbeispiele der Bremsensteuervorrichtung 70 ein- oder zweiteilig ausführen. Eine Aufteilung in drei oder mehr Bremsensteuergeräte ist ebenso denkbar.

Beispielsgemäß ist die Bremsensteuervorrichtung 70 für vier Radbremsen 50, 51, 52, 53 dargestellt, eine Erweiterung auf mehr Radbremsen ist einfach möglich. Beispielsgemäß ist die Radbremse 50 dem rechten Vorderrad (FR), die Radbremse 51 dem linken Vorderrad (FL), die Radbremse 52 dem rechten Hinterrad (RR) und die Radbremse 53 dem linken Hinterrad (RL) zugeordnet.

In Fig. 4 ist ein erstes Ausführungsbeispiel einer erfindungsgemäßen Bremsensteuervorrichtung 70 schematisch dargestellt, welche einteilig als ein Bremsensteuergerät 70' ausgeführt ist. An die vier, radindividuellen Eingangsdruckanschlüsse 30, 31, 32, 33 der Bremsensteuervorrichtung 70 ist je eine Bremsleitung BL1, BL2, BL3, BL4 angeschlossen, welche je von einem der radindividuellen Ausgangsdruckanschlüsse 20, 21, 22, 23 der nicht dargestellten ersten Bremsensteuervorrichtung 60 kommt. An die vier, radindividuellen Ausgangsdruckanschlüsse 40, 41, 42, 43 der Bremsensteuervorrichtung 70 ist je eine Bremsleitung BL1', BL2', BL3', BL4' angeschlossen, welche zu einer der Radbremsen 50, 51, 52, 53 führt.

Bremsensteuervorrichtung 70 umfasst beispielsgemäß vier (für jede Radbremse einen Druckregelkreis) identische, vollständig getrennte Druckregelkreise mit jeweils einer elektrisch ansteuerbaren Druckquelle 1 und einem elektrisch betätigbaren Trennventil 3. Die vier Trennventile 3 stellen eine Druckregelventilanordnung zum Einstellen radindividueller Bremsdrücke an den Ausgangsdruckanschlüssen 40, 41, 42, 43 dar.

Je Druckregelkreis ist das Trennventil 3 zwischen Eingangsdruckanschluss 30, 31, 32, 33 und Ausgangsdruckanschluss 40, 41, 42, 43 angeordnet. Bevorzugt sind die Trennventile 3 stromlos offen ausgeführt, so dass bei einem Ausfall der Bremsensteuervorrichtung 70 die von der Bremsensteuervorrichtung 60 bereitgestellten, radindividuellen Radbremsdrücke durch die Bremsensteuervorrichtung 70 durchgeleitet werden und an den Ausgangsdruckanschlüssen 40, 41, 42, 43 anliegen. Besonders bevorzugt sind die Trennventile 3 analogisiert oder anlog ansteuerbar ausgeführt, um im Falle einer Bremsdruckregelung mittels der Druckregelventilanordnung der Bremsensteuervorrichtung 70 eine möglichst genaue Radbremsdruckregelung zu ermöglichen.

Beispielgemäß ist jedem Trennventil 3 ein in Richtung der Radbremse 50, 51, 52, 53 öffnendes Rückschlagventil parallel geschaltet.

Jede Druckquelle 1 ist als eine Hochdruckpumpe mit einem Elektromotor, und beispielsgemäß mit Dämpfungskammer 2 und zwei Rückschlagventilen, ausgeführt. Die Saugseite der Pumpe ist mit dem zugehörigen Eingangsdruckanschluss 30, 31, 32, 33 und die Druckseite mit dem zugehörigen Ausgangsdruckanschluss 40, 41, 42, 43 verbunden.

Optional ist ein Drucksensor 5 je Radbremskreis zur Bestimmung des Druckes an einem Ausgangsdruckanschluss 40, 41, 42, 43 vorgesehen.

Die Druckquelle 1 der Bremsensteuervorrichtung 70 kann auch als eine vierkreisige Pumpe, die von einem gemeinsamen Elektromotor angetrieben wird, ausgeführt sein, wobei jeder Radbremse 50, 51, 52, 53 ein Pumpenkreis zugeordnet ist.

Die Druckregelventilanordnung des ersten Ausführungsbeispiels der Bremsensteuervorrichtung 70 umfasst lediglich ein Trennventil 3 je Radbremse.

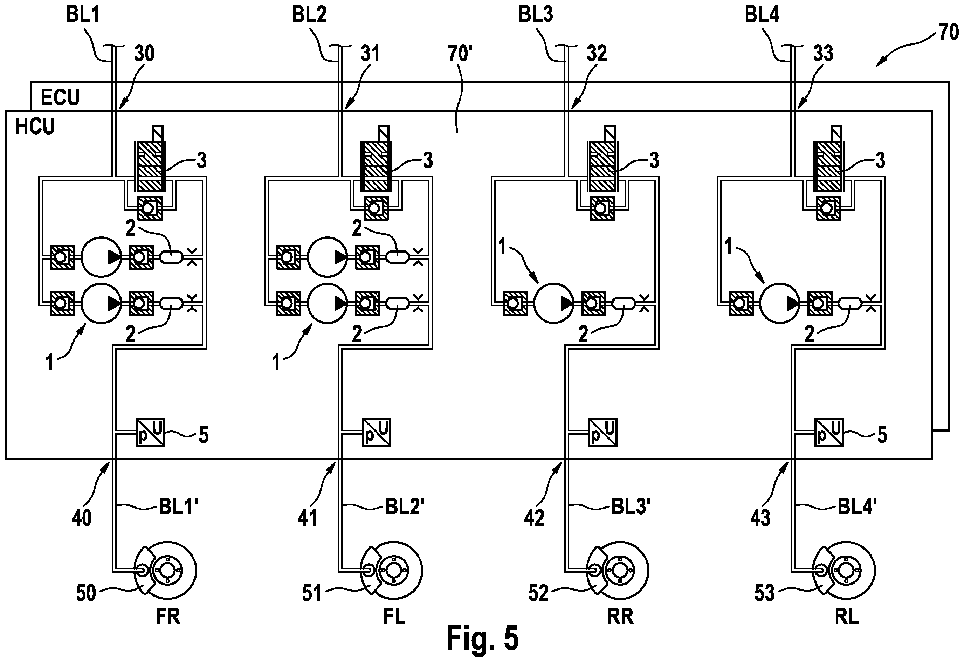

In Fig. 5 ist ein zweites Ausführungsbeispiel einer erfindungsgemäßen Bremsensteuervorrichtung 70 schematisch dargestellt. Im Unterschied zum ersten Ausführungsbeispiel der Fig. 4 sind als Druckquelle 1 für die Vorderradbremsen 50 und 51 je zwei parallel geschaltete Pumpen bzw. eine doppelkolbige Pumpe vorgesehen. Hierdurch wird die größere Volumenaufnahme der Vorderradbremsen berücksichtigt und eine höhere Pumpleistung vorgehalten. Vergleichbares kann auch durch unterschiedliche Kolbengrößen dargestellt werden.

Bevorzugt ist die Druckquelle des zweiten Bremsensteuergeräts 70 als eine sechskreisige Pumpe ausgeführt.

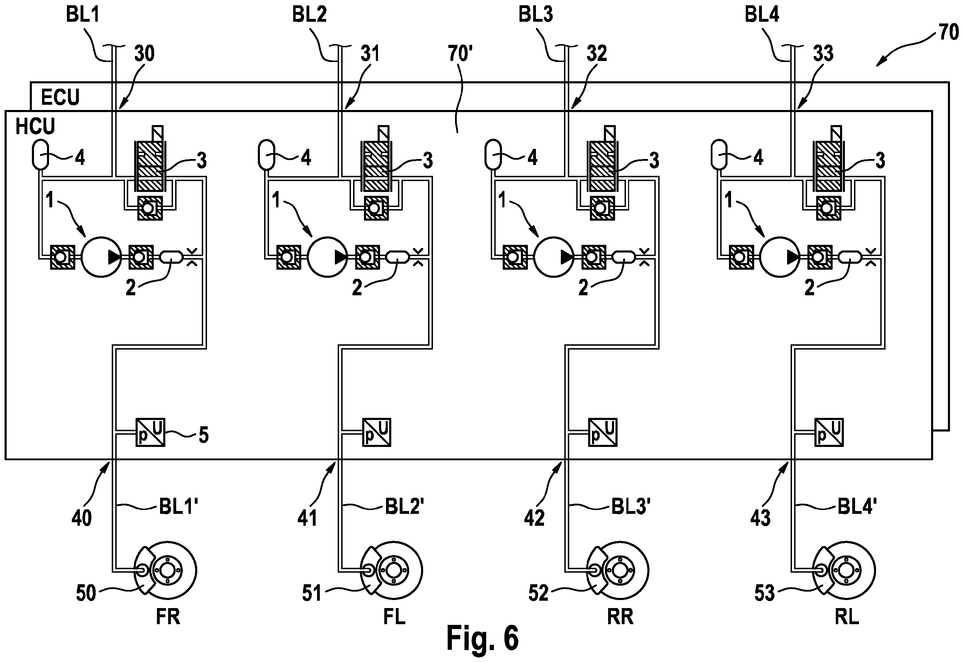

In Fig. 6 ist ein drittes Ausführungsbeispiel einer erfindungsgemäßen Bremsensteuervorrichtung 70 schematisch dargestellt. Im Unterschied zum ersten Ausführungsbeispiel der Fig. 4 ist je Druckregelkreis ein Druckmittelreservoir 4 vorgesehen, welches mit der Saugseite der Pumpe verbunden ist.

Das Druckmittelreservoir 4 ist als Gleichdruckreservoir ausgeführt. Vorteilhafterweise ist das Druckmittelreservoir 4 hochdruckfest und im Ruhezustand gefüllt. Das Druckmittelreservoir 4 dient als Vorratsspeicher bei selbsttätigem Ansaugen der zugeordneten Pumpe. Das Druckmittelreservoir 4 ist z.B. als Kolbenspeicher oder als Balgspeicher ausgeführt.

Die Druckmittelreservoirs 4 erleichtern das Ansaugen von Druckmittel oder halten vorteilhafterweise ausreichend Druckmittel zum Befüllen jeweils eines Bremssattels vor, falls über die vorgeschalteten Bremsleitungen BL1, BL2, BL3, BL4 nicht genügend schnell oder kein Druckmittel bereitgestellt wird.

Gemäß einem nicht dargestellten Ausführungsbeispiel einer erfindungsgemäßen Bremsensteuervorrichtung sind bei einem Ausführungsbeispiel gemäß Fig. 5 mit zwei parallel geschalteten Pumpen je Vorderradbremse 50, 51 je Druckregelkreis ein Druckmittelreservoir 4 entsprechend Fig. 6 vorgesehen.

In Fig. 7 ist ein viertes Ausführungsbeispiel einer erfindungsgemäßen Bremsensteuervorrichtung 70 schematisch dargestellt, welche zweiteilig als zwei Bremsensteuergeräte 70a, 70b ausgeführt ist. An die Eingangsdruckanschlüsse 30, 31 des Bremsensteuergeräts 70a sind die Bremsleitungen BL1, BL2 angeschlossen, welche von den Ausgangsdruckanschlüssen 20, 21 des (nicht dargestellten) ersten Bremsensteuergeräts 60 kommen. An die Ausgangsdruckanschlüsse 40, 41 des Bremsensteuergeräts 70a sind die Bremsleitungen BL1', BL2' angeschlossen, welche zu den Radbremsen 50, 51 führen. Entsprechend sind an die Eingangsdruckanschlüsse 32, 33 des Bremsensteuergeräts 70b die Bremsleitungen BL3, BL4 angeschlossen, welche von den Ausgangsdruckanschlüssen 22, 23 des (nicht dargestellten) ersten Bremsensteuergeräts 60 herkommen; an die Ausgangsdruckanschlüsse 42, 43 des Bremsensteuergeräts 70b sind die Bremsleitungen BL3', BL4' angeschlossen, welche zu den Radbremsen 52, 53 führen.

Die Bremsensteuergeräte 70a, 70b umfassen beispielsgemäß vier (für jede Radbremse einen Druckregelkreis) identische, vollständig getrennte Druckregelkreise mit jeweils einer Druckquelle 1, einem Trennventil 3, einem Umschaltventil 9, einem Einlassventil 8, einem Auslassventil 6 und einem Niederdruckspeicher 7. Weiterhin ist ein Drucksensor 5 je Radbremskreis vorgesehen.

Die zwölf Ventile 3, 6, 8, 9 stellen eine Druckregelventilanordnung zum Einstellen radindividueller Bremsdrücke an den Ausgangsdruckanschlüssen 40, 41, 42, 43 dar.

Die Trennventile 3 sind bevorzugt wir im ersten Ausführungsbeispiel ausgeführt und angeordnet. Beispielgemäß ist auch hier jedem Trennventil 3 ein in Richtung der Radbremse 50, 51, 52, 53 öffnendes Rückschlagventil parallel geschaltet.

Zwischen Trennventil 3 und Radbremse ist bevorzugt ein stromlos offen und analogisiert oder anlog ansteuerbar ausgeführtes Einlassventil 8 angeordnet. Dem Einlassventil 8 ist bevorzugt ein in Richtung des Eingangsdruckanschluss 30, 31, 32, 33 öffnendes Rückschlagventil parallel geschaltet.

Zum Bremsdruckabbau während einer Antiblockierregelung ist jede Radbremse über ein stromlos geschlossenes Auslassventil 6 mit dem zugeordneten Niederdruckspeicher 7 verbindbar. Der Niederdruckspeicher 7 ist jeweils über ein stromlos geschlossenes Umschaltventil 9 mit dem zugeordneten Eingangsdruckanschluss 30, 31, 32, 33 verbindbar.

Die Ausführung der Druckquelle 1 entspricht dem ersten Ausführungsbeispiel mit Hochdruckpumpe, Dämpfungskammer 2 und zwei Rückschlagventilen. Die Saugseite der Pumpe ist je mit der Verbindungsleitung zwischen Auslassventil 6 und Umschaltventil 9 verbunden, die Druckseite ist mit der Verbindungsleitung zwischen Trennventil 3 und Einlassventil 8 verbunden.

Gemäß einem nicht dargestellten Ausführungsbeispiel einer erfindungsgemäßen Bremsensteuervorrichtung sind die hydraulischen Anordnungen der Bremsensteuergeräte 70a und 70b der Fig. 7 in einem einzigen Bremsensteuergerät 70' (einteile Bremsensteuervorrichtung 70) angeordnet. Das Bremsensteuergerät 70' entspricht dann im Wesentlichen einem an sich bekannten ABS/ESP-Bremsensteuergerät.

Gemäß einem weiteren, nicht dargestellten Ausführungsbeispiel einer erfindungsgemäßen Bremsensteuervorrichtung werden die Umschaltventile 9 in der Druckregelventilanordnung des vierten Ausführungsbeispiels weggelassen und dafür je Druckregelkreis ein in Richtung des Eingangsdruckanschlusses 30, 31, 32, 33 öffnendes Rückschlagventil an die in Fig. 7 mit dem gestrichelten Kästchen 10 markierten Position eingefügt.

Gemäß einem weiteren, nicht dargestellten Ausführungsbeispiel einer erfindungsgemäßen Bremsensteuervorrichtung werden in dem vierten Ausführungsbeispiel der Fig. 7 die Umschaltventile 9 der Druckregelventilanordnung sowie die Niederdruckspeicher 7 weggelassen.

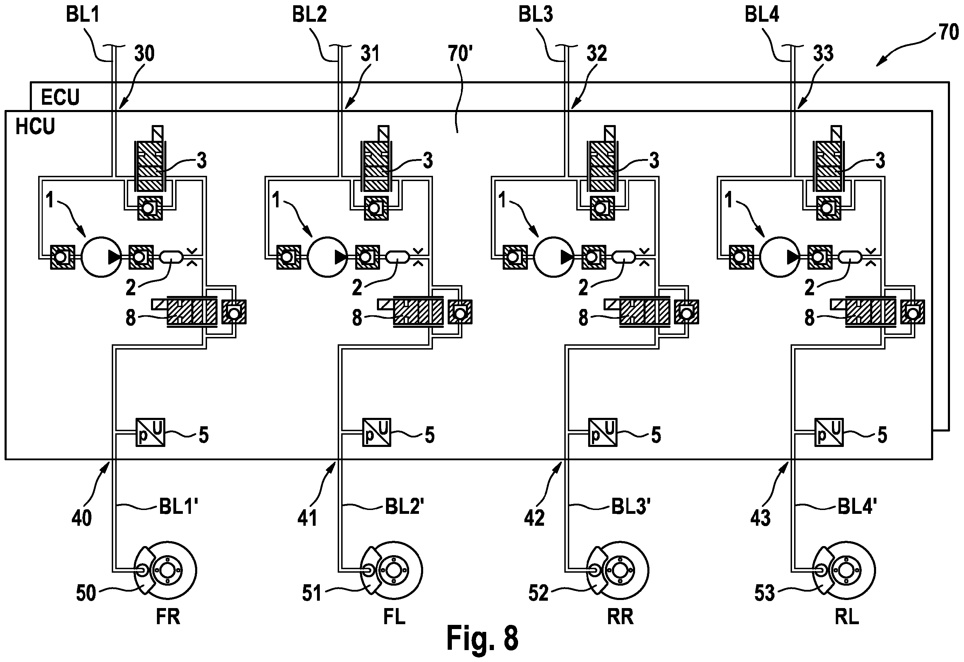

In Fig. 8 ist ein fünftes Ausführungsbeispiel einer erfindungsgemäßen Bremsensteuervorrichtung 70 schematisch dargestellt. Im Unterschied zum ersten Ausführungsbeispiel der Fig. 4 ist bei der Druckregelventilanordnung zusätzlich nur ein Einlassventil 8 je Druckregelkreis vorgesehen, welches stromlos offen sowie analogisiert oder anlog ansteuerbar ausgeführt ist. Dem Einlassventil 8 ist bevorzugt ein in Richtung des Eingangsdruckanschluss 30, 31, 32, 33 öffnendes Rückschlagventil parallel geschaltet.

Wird in den in der Fig. 3 gezeigten beispielhaften Bremsanlagen zusätzlich eine erfindungsgemäße Bremsensteuervorrichtung 70 zwischen erster Bremsensteuervorrichtung 60 und Radbremsen 50, 51, 52, 53 eingefügt, können durch Einschalten der Druckquellen 1 und analogem Ansteuern der Trennventile 3 individuelle Drücke pro Radbremse eingestellt, oder bei vorhandenem Drucksensor 5 auch eingeregelt werden.

Im Falle einer einteiligen Bremsensteuervorrichtung 70 ist die Druckquelle 1 bevorzugt als zumindest vierkreisige Pumpe ausgeführt. Besonders bevorzugt ist die Pumpe vierkreisig oder sechskreisig ausgeführt.

Im Falle einer zweiteiligen Bremsensteuervorrichtung 70 ist die Druckquelle 1 bevorzugt je Bremsensteuergerät 70a, 70b als zweikreisige Pumpe ausgeführt.

Umfasst die Bremsensteuervorrichtung 70 kein eigenes Druckmittelreservoir 4, so ist die vorgeschaltete Bremsensteuervorrichtung 60 bevorzugt derart ausgeführt, dass ein Ansaugen von Druckmittel durch die Bremsleitungen BL1, BL2, BL3, BL4 für die zweite Bremsensteuervorrichtung 70 möglich ist. So kann Druckmittel auch dann an die Radbremsen gefördert werden, wenn die Bremsensteuervorrichtung 60 ausfällt oder inaktiv ist.

Alternativ, z.B. wenn der Durchflusswiederstand der Bremsensteuervorrichtung 60 zu hoch ist, ist es bevorzugt, dass die Bremsensteuervorrichtung 70 zumindest ein Druckmittelreservoir, z.B. in Form eines druckfesten Balgs oder Kolbenspeichers, umfasst.

Die Pumpenpfade sind in den Ausführungsbeispielen der Fig. 5 bis 8 nur beispielhaft dargestellt, z.B. ist eine Dämpfungskammer 2 optional.

Durch die Erfindung werden die funktionalen Anforderungen an eine Bremsanlage aus dem hochautomatischen Fahren erfüllt.

Weiterhin ist eine Gestaltung eines "Baukastens" für Bremsanlagen möglich, bei dem die Standardfahrzeuge ohne HAF mit nur einer ersten Bremsensteuervorrichtung 60 ausgerüstet werden können und optional für die Ausrüstung mit der HAF-Funktion die Bremsanlage einfach um eine erfindungsgemäße Bremsensteuervorrichtung 70 als zweite Bremsensteuervorrichtung, insbesondere als Zusatz-Bremsensteuergerät, erweitert wird.

## Patentansprüche

1. Bremsensteuervorrichtung (70) für zumindest vier fluidbetätigbare, insbesondere hydraulisch betätigbare, Radbremsen (50, 51, 52, 53) einer Fahrzeugbremsanlage, welche zumindest einen Eingangsdruckanschluss, für jede Radbremse einen radindividuellen Ausgangsdruckanschluss (40, 41, 42, 43), eine Druckregelventilanordnung (72, 3, 6, 8, 9) zum Einstellen radindividueller Bremsdrücke an den Ausgangsdruckanschlüssen und zumindest eine Druckquelle (73, 1) umfasst, **dadurch gekennzeichnet, dass** die Bremsensteuervorrichtung (70) für jede Radbremse (50, 51, 52, 53) einen radindividuellen Eingangsdruckanschluss (30, 31, 32, 33) umfasst.

2. Bremsensteuervorrichtung nach Anspruch 1, **dadurch gekennzeichnet, dass** die zumindest eine Druckquelle (1) für jede Radbremse (50, 51, 52, 53) zumindest eine Pumpe umfasst.

3. Bremsensteuervorrichtung nach Anspruch 1, **dadurch gekennzeichnet, dass** die zumindest eine Druckquelle (1) für jede Radbremse (50, 51, 52, 53) zumindest einen Pumpenkreis einer, insbesondere mehrkreisigen, Pumpe umfasst.

4. Bremsensteuervorrichtung nach einem der Ansprüche 1 bis 3, **dadurch gekennzeichnet, dass** die Bremsensteuervorrichtung für jede Radbremse einen Drucksensor (5) zur Erfassung des Radbremsdruckes umfasst.

5. Bremsensteuervorrichtung nach einem der Ansprüche 1 bis 4, **dadurch gekennzeichnet, dass** die Druckregelventilanordnung für jede Radbremse zumindest ein elektrisch betätigbares, insbesondere analog ansteuerbares oder analogisiert ausgeführtes, Ventil (3, 8) umfasst.

6. Bremsensteuervorrichtung nach einem der Ansprüche 1 bis 5, **dadurch gekennzeichnet, dass** die Bremsensteuervorrichtung ein Druckmittelreservoir (4), insbesondere für jede Radbremse ein Druckmittelreservoir (4), umfasst, welches Druckmittel zum Befüllen zumindest einer Radbremse bereithält.

7. Bremsensteuervorrichtung nach einem der Ansprüche 1 bis 6, **dadurch gekennzeichnet, dass** die Bremsensteuervorrichtung (70) einteilig als ein Bremsensteuergerät (70'), insbesondere mit einer elektronischen Steuer- und Regeleinheit und einer hydraulischen Steuer- und Regeleinheit, ausgeführt ist.

8. Bremsensteuervorrichtung nach einem der Ansprüche 1 bis 6, **dadurch gekennzeichnet, dass** die Bremsensteuervorrichtung (70) zwei- oder mehrteilig ausgeführt ist, insbesondere als zwei Bremsensteuergeräte (70a, 70b) mit je einer elektronischen Steuer- und Regeleinheit und einer hydraulischen Steuer- und Regeleinheit ausgeführt ist.

9. Bremsanlage für Fahrzeuge, insbesondere für Kraftfahrzeuge, mit, insbesondere zumindest vier, fluidbetätigbaren, insbesondere hydraulisch betätigbaren, Radbremsen (50, 51, 52, 53) und zumindest einer ersten, insbesondere elektrohydraulischen, Bremsensteuervorrichtung (60), welche eine erste Druckregelventilanordnung (62) zum Einstellen radindividueller Bremsdrücke, und insbesondere eine erste Druckquelle (63), sowie für jede Radbremse einen radindividuellen Ausgangsdruckanschluss (20, 21, 22, 23) umfasst, **dadurch gekennzeichnet, dass** eine zweite, insbesondere elektrohydraulische, Bremsensteuervorrichtung (70), welche eine zweite Druckregelventilanordnung (72, 3, 6, 8, 9), und insbesondere eine zweite Druckquelle (73, 1), umfasst, in Reihe zwischen die erste Bremsensteuervorrichtung (60) und die Radbremsen (50, 51, 52, 53) geschaltet ist, wobei die zweite Bremsensteuervorrichtung (70) für jede Radbremse (50, 51, 52, 53) einen radindividuellen Eingangsdruckanschluss (30, 31, 32, 33) umfasst, wobei jeder Ausgangsdruckanschluss (20, 21, 22, 23) der ersten Bremsensteuervorrichtung (60) mit, insbesondere genau, einem der Eingangsdruckanschlüsse (30, 31, 32, 33) der zweiten Bremsensteuervorrichtung (70) verbunden (BL1, BL2, BL3, BL4) ist.

10. Bremsanlage nach Anspruch 9, **dadurch gekennzeichnet, dass** die zweite Bremsensteuervorrichtung (70) für jede Radbremse einen radindividuellen Ausgangsdruckanschluss (40, 41, 42, 43) umfasst, welcher mit einer der Radbremsen verbunden (BL1', BL2', BL3', BL4') ist.

11. Bremsanlage nach Anspruch 9 oder 10, **dadurch gekennzeichnet, dass** die erste Bremsensteuervorrichtung (60) einteilig als ein Bremsensteuergerät (160, 260) mit einer elektronischen Steuer- und Regeleinheit und einer hydraulischen Steuer- und Regeleinheit oder zweiteilig als zwei Bremsensteuergeräte (360a, 360b) mit je einer elektronischen Steuer- und Regeleinheit und einer hydraulischen Steuer- und Regeleinheit ausgeführt ist.

12. Bremsanlage nach einem der Ansprüche 9 bis 11, **dadurch gekennzeichnet, dass** für jedes der mit einer Radbremse (50, 51, 52, 53) versehenen Räder
• zumindest zwei Einrichtungen (WSS1, WSS1'; WSS2, WSS2'; WSS3, WSS3'; WSS4, WSS4') zur Erfassung einer Raddrehzahl vorgesehen sind, wobei jeweils das Signal einer der Einrichtungen (WSS1; WSS2; WSS3; WSS4) der ersten Bremsensteuervorrichtung (60) und das Signal der andere Einrichtung (WSS1'; WSS2'; WSS3'; WSS4') der zweiten Bremsensteuervorrichtung (70) zugeführt wird, oder
• zumindest eine redundant ausgeführte Einrichtung zur Erfassung einer Raddrehzahl vorgesehen ist, wobei jeweils ein Signal der Einrichtung der ersten Bremsensteuervorrichtung (60) und das andere Signal der zweiten Bremsensteuervorrichtung (70) zugeführt wird.

13. Bremsanlage nach einem der Ansprüche 9 bis 12, **dadurch gekennzeichnet, dass** die erste Bremsensteuervorrichtung (60) von einer ersten elektrischen Energiequelle (85) und die zweite Bremsensteuervorrichtung (70) von einer zweiten elektrischen Energiequelle (86) mit elektrischer Energie versorgt wird.

14. Bremsanlage nach einem der Ansprüche 9 bis 13, **dadurch gekennzeichnet, dass** die erste Bremsensteuervorrichtung (60) über eine erste Datenverbindung (61), insbesondere einen ersten Datenbus, und die zweite Bremsensteuervorrichtung (70) über eine zweite Datenverbindung (71), insbesondere einen zweiten Datenbus, mit einer dritten elektronischen Steuer- und Regeleinheit (80) verbunden ist, welche insbesondere eine Bremsanforderung oder einen Bremsdrucksollwert vorgibt.

15. Bremsanlage nach einem der Ansprüche 9 bis 14, **dadurch gekennzeichnet, dass** die zweite Bremsensteuervorrichtung (70) eine Bremsensteuervorrichtung gemäß einem der Ansprüche 1 bis 8 ist.

## Claims

1. Brake control apparatus (70) for at least four fluidically operable, in particular hydraulically operable, wheel brakes (50, 51, 52, 53) of a vehicle brake system, which brake control apparatus comprises at least one input pressure connection, a wheel-specific output pressure connection (40, 41, 42, 43) for each wheel brake, a pressure regulating valve arrangement (72, 3, 6, 8, 9) for adjusting wheel-specific brake pressures at the output pressure connections, and at least one pressure source (73, 1), **characterized in that** the brake control apparatus (70) comprises a wheel-specific input pressure connection (30, 31, 32, 33) for each wheel brake (50, 51, 52, 53).

2. Brake control apparatus according to Claim 1, **characterized in that** the at least one pressure source (1) comprises at least one pump for each wheel brake (50, 51, 52, 53).

3. Brake control apparatus according to Claim 1, **characterized in that** the at least one pressure source (1) comprises at least one pump circuit of an, in particular multiple-circuit, pump for each wheel brake (50, 51, 52, 53).

4. Brake control apparatus according to one of Claims 1 to 3, **characterized in that** the brake control apparatus comprises a pressure sensor (5) for detecting the wheel brake pressure for each wheel brake.

5. Brake control apparatus according to one of Claims 1 to 4, **characterized in that** the pressure regulating valve arrangement comprises at least one electrically operable valve (3, 8), which can be actuated in an analogue manner or is embodied in an analogized manner in particular, for each wheel brake.

6. Brake control apparatus according to one of Claims 1 to 5, **characterized in that** the brake control apparatus comprises a pressure medium reservoir (4), in particular a pressure medium reservoir (4) for each wheel brake, which pressure medium reservoir keeps pressure medium ready for filling at least one wheel brake.

7. Brake control apparatus according to one of Claims 1 to 6, **characterized in that** the brake control apparatus (70) is formed in one piece as a brake controller (70'), in particular with an electronic open-loop and closed-loop control unit and a hydraulic open-loop and closed-loop control unit.

8. Brake control apparatus according to one of Claims 1 to 6, **characterized in that** the brake control apparatus (70) is embodied in two or more parts, in particular as two brake controllers (70a, 70b), each comprising an electronic open-loop and closed-loop control unit and a hydraulic open-loop and closed-loop control unit.

9. Brake system for vehicles, in particular motor vehicles, comprising, in particular at least four, fluidically operable, in particular hydraulically operable, wheel brakes (50, 51, 52, 53) and at least one first, in particular electrohydraulic, brake control apparatus (60) which comprises a first pressure regulating valve arrangement (62) for adjusting wheel-specific brake pressures, and in particular a first pressure source (63), and also a wheel-specific output pressure connection (20, 21, 22, 23) for each wheel brake, **characterized in that** a second, in particular electrohydraulic, brake control apparatus (70), which comprises a second pressure regulating valve arrangement (72, 3, 6, 8, 9), and in particular a second pressure source (73, 1), is connected in series between the first brake control apparatus (60) and the wheel brakes (50, 51, 52, 53), wherein the second brake control apparatus (70) comprises a wheel-specific input pressure connection (30, 31, 32, 33) for each wheel brake (50, 51, 52, 53), wherein each output pressure connection (20, 21, 22, 23) of the first brake control apparatus (60) is connected (BL1, BL2, BL3, BL4) to, in particular precisely, one of the input pressure connections (30, 31, 32, 33) of the second brake control apparatus (70).

10. Brake system according to Claim 9, **characterized in that** the second brake control apparatus (70) comprises a wheel-specific output pressure connection (40, 41, 42, 43) for each wheel brake, which output pressure connection is connected (BL1', BL2', BL3', BL4') to one of the wheel brakes.

11. Brake system according to Claim 9 or 10, **characterized in that** the first brake control apparatus (60) is designed in one part as a brake controller (160, 260) comprising an electronic open-loop and closed-loop control unit and a hydraulic open-loop and closed-loop control unit or in two parts as two brake controllers (360a, 360b), each comprising an electronic open-loop and closed-loop control unit and a hydraulic open-loop and closed-loop control unit.

12. Brake system according to one of Claims 9 to 11, **characterized in that**
• at least two devices (WSS1, WSS1'; WSS2, WSS2'; WSS3, WSS3'; WSS4, WSS4') for detecting a wheel rotation speed are provided, wherein in each case the signal of one of the devices (WSS1; WSS2; WSS3; WSS4) is supplied to the first brake control apparatus (60) and the signal of the other device (WSS1'; WSS2'; WSS3'; WSS4') is supplied to the second brake control apparatus (70), or
• at least one redundant device for detecting a wheel rotation speed is provided, wherein in each case one signal of the device is supplied to the first brake control apparatus (60) and the other signal is supplied to the second brake control apparatus (70)
for each of the wheels which are provided with a wheel brake (50, 51, 52, 53).

13. Brake system according to one of Claims 9 to 12, **characterized in that** the first brake control apparatus (60) is supplied with electrical energy from a first electrical energy source (85), and the second brake control apparatus (70) is supplied with electrical energy from a second electrical energy source (86).

14. Brake system according to one of Claims 9 to 13, **characterized in that** the first brake control apparatus (60) is connected to a third electronic open-loop and closed-loop control unit (80) via a first data connection (61), in particular a first data bus, and the second brake control apparatus (70) is connected to the said third electronic open-loop and closed-loop control unit (80) via a second data connection (71), in particular a second data bus, which third electronic open-loop and closed-loop control unit prespecifies, in particular, a braking request or a brake pressure setpoint value.

15. Brake system according to one of Claims 9 to 14, **characterized in that** the second brake control apparatus (70) is a brake control apparatus according to one of Claims 1 to 8.

## Revendications

1. Dispositif de commande de frein (70) pour au moins quatre freins de roue (50, 51, 52, 53) actionnables par fluide, notamment actionnables hydrauliquement, d'un système de freinage de véhicule, lequel comporte au moins un raccord de pression d'entrée, un raccord de pression de sortie (40, 41, 42, 43) individuel par roue pour chaque frein de roue, un arrangement de régulateurs de pression (72, 3, 6, 8, 9) destiné à régler des pressions de freinage individuelles par roue au niveau des raccords de pression de sortie et au moins une source de pression (73, 1), **caractérisé en ce que** le dispositif de commande de frein (70) comporte un raccord de pression d'entrée (30, 31, 32, 33) individuel par roue pour chaque frein de roue (50, 51, 52, 53).

2. Dispositif de commande de frein selon la revendication 1, **caractérisé en ce que** l'au moins une source de pression (1) comporte au moins une pompe pour chaque frein de roue (50, 51, 52, 53).

3. Dispositif de commande de frein selon la revendication 1, **caractérisé en ce que** l'au moins une source de pression (1) comporte au moins un circuit de pompe pour chaque frein de roue (50, 51, 52, 53), notamment une pompe à plusieurs circuits.

4. Dispositif de commande de frein selon l'une des revendications 1 à 3, **caractérisé en ce que** le dispositif de commande de frein comporte pour chaque frein de roue un capteur de pression (5) destiné à détecter la pression de frein de roue.

5. Dispositif de commande de frein selon l'une des revendications 1 à 4, **caractérisé en ce que** le dispositif de commande de frein comporte pour chaque frein de roue au moins une vanne (3, 8) actionnable électriquement, pouvant notamment être commandée de manière analogique ou réalisée à fonctionnement analogique.

6. Dispositif de commande de frein selon l'une des revendications 1 à 5, **caractérisé en ce que** le dispositif de commande de frein comporte un réservoir à fluide sous pression (4), notamment un réservoir à fluide sous pression (4) pour chaque frein de roue, lequel tient à disposition du fluide sous pression pour remplir au moins un frein de roue.

7. Dispositif de commande de frein selon l'une des revendications 1 à 6, **caractérisé en ce que** le dispositif de commande de frein (70) est réalisé d'un seul tenant sous la forme d'un contrôleur de frein (70'), notamment avec une unité électronique de commande et de régulation et une unité hydraulique de commande et de régulation.

8. Dispositif de commande de frein selon l'une des revendications 1 à 6, **caractérisé en ce que** le dispositif de commande de frein (70) est réalisé en deux parties ou plus, notamment sous la forme de deux contrôleurs de frein (70a, 70b) comprenant chacun une unité électronique de commande et de régulation et une unité hydraulique de commande et de régulation.

9. Système de freinage pour véhicules, notamment pour véhicules automobiles, comprenant notamment quatre freins de roue (50, 51, 52, 53) actionnables par fluide, notamment actionnables hydrauliquement, et au moins un premier dispositif de commande de frein (60), notamment électrohydraulique, lequel comporte un premier arrangement de régulateurs de pression (62) destiné à régler des pressions de freinage individuelles par roue, et notamment une première source de pression (63), ainsi qu'un raccord de pression de sortie (20, 21, 22, 23) individuel par roue pour chaque frein de roue, **caractérisé en ce qu'**un deuxième dispositif de commande de frein (70), notamment électrohydraulique, lequel comporte un deuxième arrangement de régulateurs de pression (72, 3, 6, 8, 9) et notamment une deuxième source de pression (73, 1), est branché en série entre le premier dispositif de commande de frein (60) et les freins de roue (50, 51, 52, 53), le deuxième dispositif de commande de frein (70) comportant un raccord de pression d'entrée (30, 31, 32, 33) individuel par roue pour chaque frein de roue (50, 51, 52, 53), chaque raccord de pression de sortie (20, 21, 22, 23) du premier dispositif de commande de frein (60) étant relié (BL1, BL2, BL3, BL4) avec, notamment exactement, un raccord de pression d'entrée (30, 31, 32, 33) du deuxième dispositif de commande de frein (70) .

10. Système de freinage selon la revendication 9, **caractérisé en ce que** le deuxième dispositif de commande de frein (70) comporte pour chaque frein de roue un raccord de pression de sortie (40, 41, 42, 43) individuel par roue, lequel est relié (BL1', BL2', BL3', BL4') à l'un des freins de roue.

11. Système de freinage selon la revendication 9 ou 10, **caractérisé en ce que** le premier dispositif de commande de frein (60) est réalisé d'un seul tenant sous la forme d'un contrôleur de frein (160, 260) avec une unité électronique de commande et de régulation et une unité hydraulique de commande et de régulation, ou en deux parties sous la forme de deux contrôleurs de frein (360a, 360b) comprenant chacun une unité électronique de commande et de régulation et une unité hydraulique de commande et de régulation.

12. Système de freinage selon l'une des revendications 9 à 11, **caractérisé en ce que** pour chacune des roues pourvues d'un frein de roue (50, 51, 52, 53),
* au moins deux appareils (WSS1, WSS1' ; WSS2, WSS2' ; WSS3, WSS3' ; WSS4, WSS4') destinés à détecter une vitesse de rotation de roue sont présents, le signal de l'un des appareils (WSS1 ; WSS2 ; WSS3 ; WSS4) étant respectivement acheminé au premier dispositif de commande de frein (60) et le signal de l'autre appareil (WSS1' ; WSS2' ; WSS3' ; WSS4') au deuxième dispositif de commande de frein (70), ou
* au moins un appareil réalisé redondant et destiné à détecter une vitesse de rotation de roue est présent, un signal de l'appareil étant respectivement acheminé au premier dispositif de commande de frein (60) et l'autre signal au deuxième dispositif de commande de frein (70).

13. Système de freinage selon l'une des revendications 9 à 12, **caractérisé en ce que** le premier dispositif de commande de frein (60) est alimenté en énergie électrique par une première source d'énergie électrique (85) et le deuxième dispositif de commande de frein (70) par une deuxième source d'énergie électrique (86).

14. Système de freinage selon l'une des revendications 9 à 13, **caractérisé en ce que** le premier dispositif de commande de frein (60) est relié par le biais d'une première liaison de données (61), notamment un premier bus de données, et le deuxième dispositif de commande de frein (70) par le biais d'une deuxième liaison de données (71), notamment un deuxième bus de données, à une troisième unité électronique de commande et de régulation (80) laquelle prescrit notamment une demande de freinage ou une pression de freinage de consigne.

15. Système de freinage selon l'une des revendications 9 à 14, **caractérisé en ce que** le deuxième dispositif de commande de frein (70) est un dispositif de commande de frein selon l'une des revendications 1 à 8.
